# EUROPEAN PATENT SPECIFICATION

(11) **EP 3 090 940 B1**
(45) Date of publication and mention of the grant of the patent: **06.12.2017**
(21) Application number: 15382231.7
(22) Date of filing: 05.05.2015
(51) Int. Cl.: B64C 3/18, B64C 5/02

(54) **HORIZONTAL TAIL PLANE WITH A MULTI-RIB TORSION BOX**
HÖHENLEITWERK MIT EINEM MEHRFACHRIPPENTORSIONSKASTEN
PLAN HORIZONTAL D'EMPENNAGE AVEC UN CAISSON DE TORSION MULTI-NERVURE

(43) Date of publication of application: 09.11.2016
(73) Proprietor: Airbus Operations, S.L., 28906 Getafe (Madrid) (ES)
(72) Inventor: Pereira Mosqueira, Fernando, 28906 Getafe (Madrid) (ES); Marasco, Andrea-Ivan, 28906 Getafe (Madrid) (ES)
(74) Representative: Carpintero Lopez, Francisco

(56) References cited:
- WO-A1-2008/037847
- US-A- 2 378 885

## Description

### Object of the invention

The present invention refers in general to aircraft primary structures formed with multi-rib torsion boxes, and manufactured mainly with composite materials, such as Carbon Fiber Reinforced Plastic (CFRP).

More specifically, an object of the invention is to provide an aircraft horizontal tail plane (HTP) having a multi-rib torsion box, which can be assembled and manufactured easier and faster than traditional HTP designs.

### Background of the invention

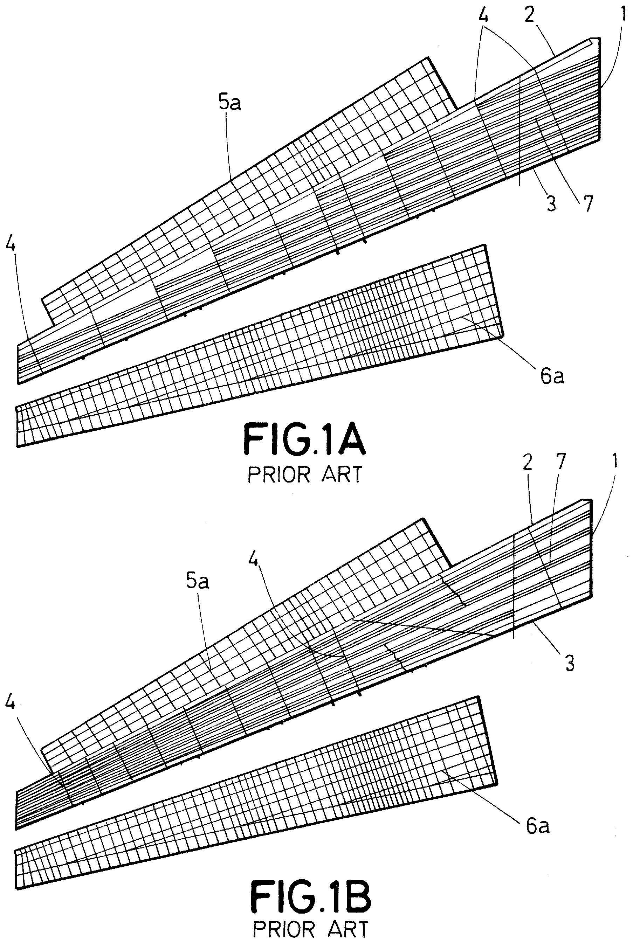

A known structure of a horizontal tail plane (HTP) of an aircraft is shown in figure 1, and comprises a multi-rib torsion box (1) formed by front and rear spars (2,3) and a plurality of ribs (4) transversally arranged and fitted to front and rear spars as to form together a box-like configuration. As it can be noted in figure 1, the ribs are obliquely arranged with respect to the plane of symmetry of the HTP.

The ribs provide torsional rigidity and support local load introductions resulting from actuator fittings, pivot fittings, support bearings etc., which are directly secured to the front and rear ribs.

Other components of the HTP such as leading and trailing edges (5,6), are assembled with the torsion box (1). Elevators are control surfaces of the aircraft and are hinged to the torsion box, which is the structural component of the HTP and as such, it has to withstand the loads to which the HTP is subjected.

An HTP torsion box of the continuous type is formed by two lateral torsion boxes (right-hand side and left-hand side torsion box) joined to each other at the central region of the HTP, and are symmetrically arranged with respect to the plane of symmetry of the horizontal tail plane.

The torsion box also includes upper and lower skin panels internally reinforced by stringers extending longitudinally. Two arrangement patterns and configurations are typically used for the stringers distribution. Figure 1A shows a first known pattern, wherein the stringers (7) are parallel to each other, are continuous through the ribs (4) and are provided with run-outs sections to avoid interference with the ribs.

Figure 1B shows a second known pattern, wherein the stringers (7) are arranged in a conical configuration converging towards a tip of the respective torsion box. In this second case the stringers are continuous in the entire length of the torsion box, thus no run-outs are needed.

In these two cases and due to the continuity of the stringers, the stringers interfere with the ribs, such as the ribs have to be designed and manufactured to solve the intersection between these two structural elements. For this reason, the ribs have to be manufactured with the so-called "mouse holes" in order to accommodate several stringers extending through the rib.

This known ribs configuration with mouse holes is shown for example in figure 9 of the European patent EP-2.851.283 A1.

However, the manufacture of this type of ribs with mouse holes is a difficult task and requires specific tooling which is also difficult to manufacture. Furthermore, the assembly of the torsion box components, is time-consuming since the stringers have to be received precisely and bonded in the respective mouse holes of the ribs.

The PCT Publication WO 2008/037847 A1 relates to a curve element and to a wing, a control surface and a stabilizer for an aircraft. The curved element (7) comprises surfaces (14, 21) provided with a plurality of profile reinforcements (20, 25) that constitute an integrated part of the structure of the surfaces and have a directed strength effect.

### Summary of the invention

The present invention is defined in the attached independent claim and it overcomes the above-mentioned drawbacks of the prior art, by providing a horizontal tail plane (HTP) having a multi-rib torsion box which assembly and manufacturing process are simplified compared with traditional HTP designs.

Therefore, an aspect of the invention refers to a horizontal tail plane for an aircraft, conventionally comprising first and second lateral torsion boxes joined to each other at a central region of the HTP, and symmetrically arranged with respect to the plane of symmetry of the horizontal tail plane.

Each of said lateral torsion boxes comprises front and rear spars, and a plurality of ribs having ends respectively joined to the front and rear spars. Upper and lower skin covers are fixed to the torsion box, and are provided with a plurality of stringers internally fixed to one of the covers.

According to the invention, a group of ribs are arranged substantially parallel to the plane of symmetry of the horizontal tail plane. Additionally, the stringers are arranged as to define an angle within the range (80°-100°) with respect to the plane of symmetry of the horizontal tail plane. It has been found, that this stringer distribution is optimum to react to torsional moments which appear at the torsion box.

Since the stringers orientation is (+/- 10°) perpendicular to the plane of symmetry, and the ribs are parallel to that plane of symmetry, it results that ribs and stringers are generally orthogonal to each other.

Due to this relative arrangement between ribs and stringers, the stringers no need to be continuous through ribs, thus each stringers extend only between two consecutive ribs. Therefore, the ribs can be manufactured without mouse holes, such as their manufacturing process is simplified.

In this way, the majority of the HTP stringers are dimensioned such as each stringer has a length shorter or equal than the distance between the two consecutive ribs within which that stringer is placed.

Additionally, some ribs of the horizontal tail plane are orthogonal to the longitudinal axis of the respective rear spar, and are placed in correspondence with an attachment fittings secured to the rear spar. Since these attachment fittings are highly loaded areas of the HTP, this orthogonal ribs enhance loads introduction from the fittings.

Some of the main advantages of the invention are:
- optimized stringers arrangement to react more efficiently to torsion moments,
- combination of ribs parallel to plane of symmetry and ribs orthogonal to rear spars,
- non-continuous stringers through ribs, eliminate mouse holes in ribs,
- minimize assembly and manufacturing time compared with prior art HTP concepts.

### Brief description of the drawings

Preferred embodiments of the invention, are henceforth described with reference to the accompanying drawings, wherein:
Figure 1.- shows in top plan view one of the two torsion boxes of a horizontal tail plane, and the traditional layout of the continuous stringers according to the prior art, wherein figure 1A shows a traditional parallel pattern and figure 1B shows a traditional conical pattern.

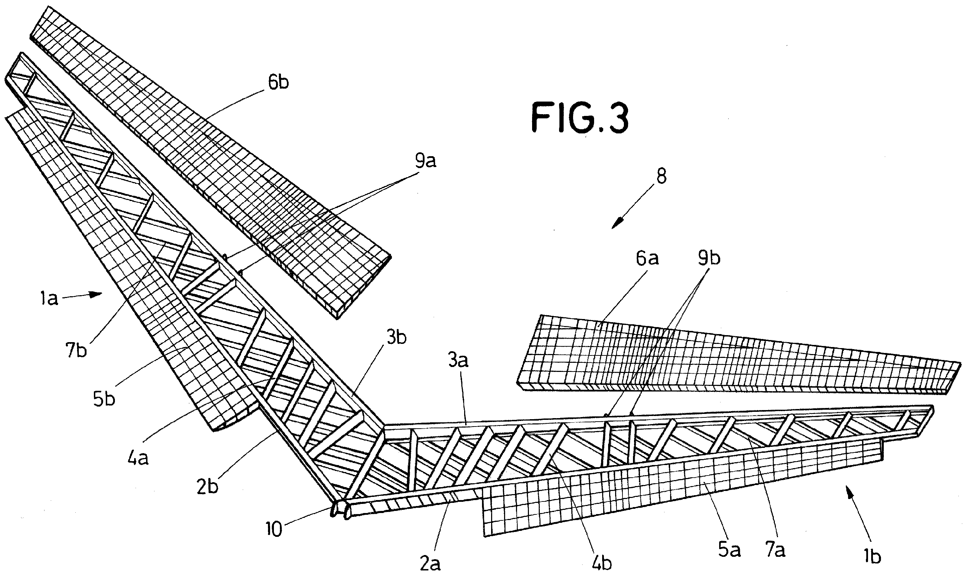

Figure 2.- shows two schematic representations in top plan view of a torsion box of a horizontal tail plane according to the invention, wherein figure 2A shows only the ribs layout, figure 3B shows the stringers layout in addition to the ribs, and figure 2C is an enlarged detail of the encircled area in figure 2B.
Figure 3.- shows a perspective view of an horizontal tail plane according to the invention.
Figure 4.- shows a schematic representation in an elevational view of a torsion box according to the invention.

### Preferred embodiment of the invention

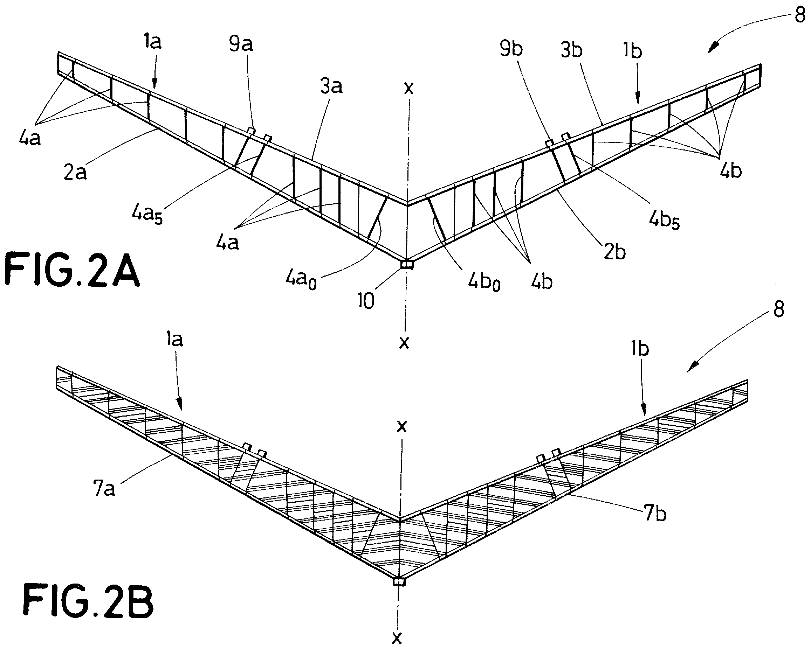

Figure 2A shows a preferred embodiment of an horizontal tail plane HTP (8) which is a symmetric structure and comprises first and second lateral torsion boxes (1a,1b) joined to each other at a central region of the HTP, and symmetrically arranged with respect to the plane of symmetry (X) of the HTP. Each of said lateral torsion boxes (1a,1b) is formed by front and rear spars (2a,3a,2b,3b), and a plurality of ribs (4a,4b) having ends joined to the respective front and rear spars (2a,3a,2b,3b).

Upper and lower skin covers (11a,11b) are supported by the torsion box, and are stiffened by a plurality of stringers (7a,7b) longitudinally arranged and fixed respectively to internal surfaces of the covers.

According to the invention, a group of ribs (4a,4b) (preferably, the majority of the ribs of the HTP), are parallel to the plane of symmetry (X) of the horizontal tail plane, as shown more clearly in figure 2A. Furthermore, the stringers (7a,7b) are arranged as to define an angle (α) within the range (80°-100°) (in top plan view) with respect to the plane of symmetry (X) of the horizontal tail plane (8).

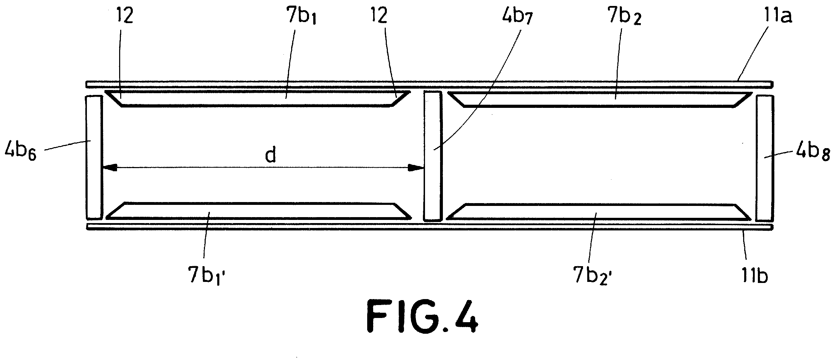

Unlike traditional designs, according to the invention the stringers (7a,7b) are not continuous through ribs (4a,4b), but stringers (7a,7b) are terminated between consecutive ribs. As shown more clearly in figure 4, each stringer is conventionally terminated with run-outs sections (12).

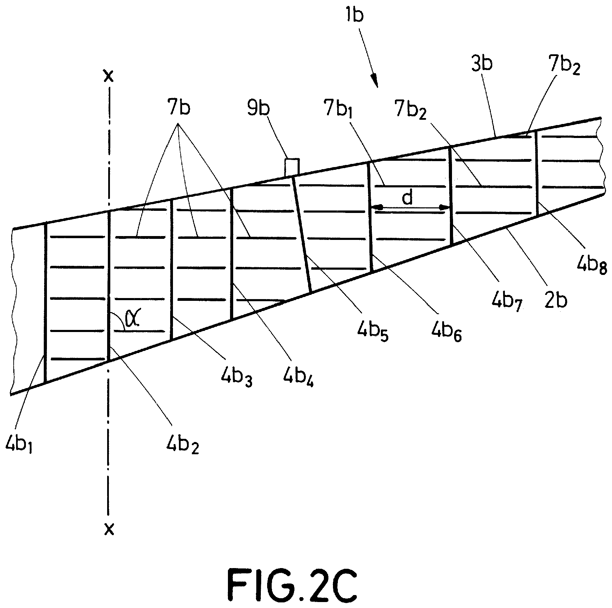

In other words, each stringer is placed between two consecutive ribs, and wherein each stringer is shorter or equal than the distance (d) between the two consecutive ribs within which that stringer is placed. For example, in the enlarged views of figures 2C and 4, the stringer (7b1) is placed or is terminated between consecutive ribs (4b6) and (4b7), and therefore the stringer (7b1) is shorter than said distance (d). The same configuration is repeated for most of the other stringers of the HTP.

In some cases, for example in the case of stringer (7b2), the stringer is much shorter than said distance (d) and one of its ends is near the rear spar (3b).

Conventionally, in this horizontal tail planes of the continuous type, some attachment fittings (9a,9b) are secured to the rear spars for the attachment of actuator fittings, pivot fittings, support bearings etc. At the front part of the HTP, a front fitting (10) is provided to receive a trimming actuator (not shown) for the HTP.

The horizontal tail plane further comprises ribs placed in correspondence with the position of these attachment fittings (9a,9b) at the rear spar, and these ribs are orthogonal to the longitudinal axis of the respective rear spar. This is the case of rib (4b5) in figure 2C, which has an end fixed at a position of the rear spar (3b) wherein the attachment fitting (9b) is located.

In the case of the inner-most ribs (4a0,4b0), that is, the ribs closer to the plane of symmetry (X), these ribs can be parallel to the plane of symmetry or orthogonal the rear spars.

As it can be noted in figures 2B,2C, the stringers (7a,7b) are grouped in rows of aligned stringers, and the rows are parallel to each other.

Most of the components of the HTP are manufactured with composite materials, preferably Carbon Fiber Reinforced Plastic (CFRP) materials, by means of any know manufacturing process or combination thereof associated to these materials.

The optimized HTP structure of the invention, significantly simplifies the manufacturing and assembly process, since the ribs are now easier to manufacture to the absence of mouse holes (as well as the associated tooling), and there is no interference between ribs and stringers.

## Claims

1. Horizontal tail plane (8) for an aircraft, the horizontal tail plane (8) comprising:
first and second lateral torsion boxes (1a,1b) joined to each other at a central region of the horizontal tail plane (8) and symmetrically arranged with respect to a plane of symmetry (X) of the horizontal tail plane (8),
wherein each of said lateral torsion boxes (1a, 1b) comprises front and rear spars (2a,3a,2b,3b), and a plurality of ribs (4) having ends respectively joined to the front and rear spars (2a,3a,2b,3b),
upper and lower covers (11a,11b) having a plurality of stringers (7a,7b) internally fixed thereto,
wherein a group of the ribs (4a,4b) are substantially parallel to the plane of symmetry (X) of the horizontal tail plane (8),
and wherein the stringers (7a,7b) are arranged as to define an angle (α) within the range 80°-100° with respect to the plane of symmetry (X) of the horizontal tail plane (8),
**characterized in that** each stringer (7a,7b) is placed between two consecutive ribs (4a,4b), and wherein each stringer (7a,7b) placed between two consecutive ribs of said group of ribs (4a,4b) is shorter than the distance (d) between the two consecutive ribs (4a,4b) within which that stringer is placed.

2. Horizontal tail plane according to claim 1 wherein the stringers (7a,7b) are grouped in rows of aligned stringers, and the rows are parallel to each other.

3. Horizontal tail plane according to claim 1 or 2 wherein a group of stringers (7a,7b) extends between a rib and a rear or front spar.

4. Horizontal tail plane according to any of the preceding claims wherein the rear spars (3a,3b) have attachment fittings (9a,9b), and wherein the horizontal tail plane (8) further comprises ribs (4a₅,4b₅) orthogonally arranged with respect to the longitudinal axis of the respective rear spar (3a,3b) and placed in correspondence with one of the attachment fittings (9a,9b).

5. Horizontal tail plane according to any of the preceding claims obtained from a composite material.

## Patentansprüche

1. Höhenleitwerk (8) für ein Luftfahrzeug, wobei das Höhenleitwerk (8) umfasst:
erste und zweite seitliche Torsionskästen (1a, 1b), die miteinander in einem zentralen Bereich des Höhenleitwerks (8) verbunden und symmetrisch zu einer Symmetrieebene (X) des Höhenleitwerks (8) angeordnet sind,
wobei jeder der genannten seitlichen Torsionskästen (1a, 1b) vordere und hintere Holme (2a, 2 b, 3a 3 b) und einer Vielzahl Spanten (4) mit Enden aufweist, die jeweils an den vorderen und hinteren Holmen (2a, 3a, 2 b, 3 b) angebunden sind,
obere und untere Abdeckungen (1 1a, 11b) mit einer Vielzahl von Stringern (7a, 7 b), die innenseitig an diesen angeordnet sind,
wobei eine Gruppe der Spanten (4a, 4 b) im Wesentlichen parallel zu der Symmetrieebene (X) des Höhenleitwerks (8) verläuft,
und wobei die Stringer (7a, 7 b) in einem Winkel (α) im Bereich von 80° - 100° bezogen auf die Symmetrieebene (X) des Höhenleitwerks (8) angeordnet sind,
**dadurch gekennzeichnet, dass** jeder Stringer (7a, 7 b) zwischen zwei aufeinander folgenden Spanten (4a, 4 b) angeordnet ist, und wobei jeder zwischen zwei aufeinander folgenden Spanten der genannten Gruppe von Spanten (4a, 4b) angeordnete Stringer (7a, 7 b) kürzer ist als der Abstand (d) zwischen den beiden aufeinander folgenden Spanten (4a, 4 b), zwischen denen der betreffende Stringer angeordnet ist.

2. Höhenleitwerk nach Anspruch 1, wobei die Stringer (7a, 7 b) in Reihen von axial ausgerichteten Stringern gruppiert sind, wobei die Reihen parallel zueinander verlaufen.

3. Höhenleitwerk Flugzeug nach Anspruch 1 oder 2, wobei eine Gruppe von Stringern (7a, 7 b) sich zwischen einem Spant und einem hinteren oder vorderen Holm erstrecken.

4. Höhenleitwerk nach einem der vorstehenden Ansprüche, wobei die hinteren Holme (3a, 3 b) Befestigungsmittel (9a, 9 b) aufweisen, und wobei das Höhenleitwerk (8) weiter Spanten (4a₅, 4b₅) umfasst, die orthogonal zur Längsachse des jeweiligen hinteren Holms (3a, 3 b) ausgerichtet und passend zu einem der Befestigungsmittel (9a, 9 b) angeordnet sind.

5. Höhenleitwerk nach einem der vorstehenden Ansprüche, erhalten aus einem Verbundwerkstoff.

## Revendications

1. Plan horizontal d'empennage (8) pour un aéronef, ce plan horizontal d'empennage (8) comprenant :
un premier et second caissons de torsion latéraux (1a, 1b) assemblés entre eux dans une région centrale du plan horizontal d'empennage (8) et disposés symétriquement par rapport à un plan de symétrie (X) du plan horizontal d'empennage (8),
chacun desdits caissons de torsion latéraux (1a, 1b) comprenant des longerons avant et arrière (2a, 3a, 2b, 3b) et une pluralité de nervures (4) ayant des extrémités jointes respectivement aux longerons avant et arrière (2a, 3a, 2b, 3b),
des revêtements supérieur et inférieur (11a, 11b) ayant une pluralité de lisses (7a, 7b) fixées dessus intérieurement,
un groupe de nervures (4a, 4b) étant sensiblement parallèles au plan de symétrie (X) du plan horizontal d'empennage (8),
et les lisses (7a, 7b) étant disposées de sorte à former un angle (α) de l'ordre de 80 à 100° par rapport au plan de symétrie (X) du plan horizontal d'empennage (8),
**caractérisé en ce que** chaque lisse (7a, 7b) est placée entre deux nervures (4a, 4b) consécutives et que chaque lisse (7a, 7b) placée entre deux nervures consécutives dudit groupe de nervures (4a, 4b) est plus courte que la distance (d) entre les deux nervures (4a, 4b) consécutives entre lesquelles cette lisse est placée.

2. Plan horizontal d'empennage selon la revendication 1 dans lequel les lisses (7a, 7b) sont groupées en rangées de lisses alignées, et les rangées sont parallèles entre elles.

3. Plan horizontal d'empennage selon la revendication 1 ou 2 dans lequel un groupe de lisses (7a, 7b) s'étend entre une nervure et un longeron arrière ou avant.

4. Plan horizontal d'empennage selon l'une quelconque des revendications précédentes dans lequel les longerons arrière (3a, 3b) ont des raccords de fixation (9a, 9b), le plan horizontal d'empennage (8) comprenant en outre des nervures (4a₅, 4b₅) disposées perpendiculairement à l'axe longitudinal du longeron arrière (3a, 3b) correspondant et placées au niveau d'un des raccords de fixation (9a, 9b).

5. Plan horizontal d'empennage selon l'une quelconque des revendications précédentes obtenu à partir d'un matériau composite.
